(19) Europäisches Patentamt
European Patent Office
Office européen des brevets

(11) EP 2 039 414 A1

(12) **EUROPÄISCHE PATENTANMELDUNG**

(43) Veröffentlichungstag:
25.03.2009 Patentblatt 2009/13

(51) Int Cl.:
*B01D 46/44* (2006.01)    *F01M 13/04* (2006.01)

(21) Anmeldenummer: 08016059.1

(22) Anmeldetag: **11.09.2008**

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(30) Priorität: **18.09.2007 DE 202007013145 U**

(71) Anmelder: **Friedrichs Filtersysteme GmbH**
**41849 Wassenberg (DE)**

(72) Erfinder: **Friedrichs, Andreas**
**52080 Aachen (DE)**

(74) Vertreter: **Freischem, Werner**
**Patentanwälte Freischem,**
**An Gross St. Martin 2**
**50667 Köln (DE)**

(54) **Abscheider**

(57)    Abscheider für mit Flüssigkeitstropfen oder Nebel kontaminiertes gasförmiges Medium, mit einem Gehäuse (1), das einen Einlass (2) für das kontaminierte Medium (8) und einen Auslass (3) für das gereinigte Medium (10) sowie einen Ablauf (6) für die abgeschiedene Flüssigkeit (11) aufweist und das mit einer Filtervorrichtung (4) versehen ist zur Reinigung des kontaminierten Mediums und zwischen der Filtervorrichtung (4) und dem Auslass (3) mindestens eine Unterdruck erzeugende Vorrichtung (5) angeordnet ist, die ungeregelt mit annähernd konstanter Leistung saugt.

Zur Regelung des Druckes im Einlassbereich ist der Auslassbereich (3) über eine Druckausgleichsleitung (7) mit dem Einlassbereich (2) verbunden zur Rückführung eines Teils des gereinigten gasförmigen Mediums (10).

**Beschreibung**

Die Erfindung bezieht sich auf einen Abscheider für mit Flüssigkeitstropfen/-nebel kontaminierte gasförmige Medien z.B. Luft. Derartige Abscheider dienen als Ölnebenabscheider oder als Emulsionsnebelabscheider an Werkzeugmaschinen oder zur Kurbelwellenraum-Entlüftung. Derartige Abscheider sind mit mindestens einer Filtervorrichtung ausgestattet und haben ein Gehäuse, das einen Einlass für das kontaminierte Medium und einen Auslass für das gereinigte Medium sowie einen Ablauf für die abgeschiedene Flüssigkeit aufweist und bei dem zwischen Einlass und Auslass die Filtervorrichtung und zwischen Filtervorrichtung und Auslass mindestens eine Unterdruck erzeugende Vorrichtung angeordnet sind. Die abgeschiedene Flüssigkeit, z.B. Öl, kann wieder zurück in einen Kreislauf geleitet oder einer Entsorgung zugeführt werden.

Der Abscheider ist mit seinem Einlass an einen Raum angeschlossen, in dem sich die Kontaminationsquelle befindet, z.B. am Kurbelwellenraum eines Motors oder an einem Öltank eines Ölversorgungssystems.

Der aus dieser Kontaminationsquelle entweichende, mit Flüssigkeitströpfchen durchsetzte Gasstrom wird in der Filtereinrichtung, z.B. mittels Filtration mechanischer Art, gereinigt. Der durch diese Filtration entstehende Strömungswiderstand bewirkt einen Druckverlust. Dieser Druckverlust führt zum Beispiel in einem Schmierölsystem zu einem Überdruck, der sich mit zunehmender Verunreinigung und Verstopfung des Filters noch erhöht. Der Druckverlust kann mittels einer Einrichtung zur Erzeugung von Unterdruck kompensiert werden. Der gereinigte Fluidstrom wird zu diesem Zweck durch diese Einrichtung geleitet. Der Druck des gereinigten Gasstroms ist hinter dem Filter und vor der Unterdruck erzeugenden Vorrichtung niedriger als hinter dieser Vorrichtung beziehungsweise als im Bereich des Auslasses. Der gereinigte Fluidstrom verlässt das Gehäuse durch den Auslass und kann wieder zurück in das System (z.B. bei Kurbelwellenraumentlüftungen zurück in den Ansaugtrakt) geleitet werden oder aber in die Umgebung entweichen. Bei Abscheidern dieser Bauart treten oftmals Probleme bei der Regelung der den Unterdruck erzeugenden Einrichtung auf. So variiert der Druckverlust der Filtereinrichtung bedingt durch wechselnden Volumenstrom, variierende Kontamination des gasförmigen Mediums und zunehmende Kontamination, Verschmutzung und Zusetzung der Filtereinrichtung. Dies bewirkt bei gleichbleibender Saugleistung der Unterdruck erzeugenden Einrichtung den oftmals unerwünschten Einfluss wechselnder Druckzustände in der Kontaminationsquelle (z.B. Kurbelwellenraum / Öltank).

Zur Kompensation dieses unerwünschten Einflusses der Unterdruck erzeugenden Einrichtung wird nach dem Stand der Technik entweder die Saugleistung der Einrichtung elektronisch geregelt oder mittels eines automatischen mechanischen Druckregelventils eingestellt. Beide Verfahren sind mit hohem technischem Aufwand verbunden. Es ist auch bekannt, die Saugleistung der Einrichtung mittels manueller Druckregelung einzustellen. Das aber ist mit hohem Arbeitsaufwand verbunden. Schließlich ist es zur Vermeidung dieses unerwünschten Zustandes bekannt, einen zusätzlichen Gasstrom aus der Umgebung dem zu reinigenden Medium, z.B. über ein Schnüffelventil, zuzuführen. Diese Maßnahme verursacht Kosten und Wartungsaufwand für Ansaugfilter für das zugeführte Fremdmedium und erfordert eine Regelung und Filtration des zusätzlich zugeführten Gasstromes und bewirkt eine zusätzliche Belastung der Filtereinrichtung mit dem Volumenstrom des zugeführten Fremdmediums.

Der Erfindung liegt die Aufgabe zugrunde, mit Hilfe von einfachen Mitteln den Druck im Bereich des Einlasses des Abscheiders zu regeln, um eine mit konstanter Leistung saugende und somit kostengünstige Unterdruck erzeugende Einrichtung installieren zu können und nach anfänglicher Einstellung und Justierung des Systems eine Wartungsfreiheit zu gewährleisten.

Zu diesem Zweck wird eine Druckausgleichsleitung zwischen dem Auslassbereich und dem Einlassbereich geschaffen zur Rückführung eines Teils des gereinigten Mediums zum Einlassbereich. Die Unterdruck erzeugende Vorrichtung ist ungeregelt und so ausgelegt, dass ihre Ansaug-Unterdruck-Leistung annähernd konstant ist. Damit im Ansaugbereich stets ein niedrigerer Druck herrscht als im Auslassbereich, ist die Unterdruck erzeugende Vorrichtung so ausgelegt, dass bei maximalem Druckverlust in der Filtervorrichtung die Saugleistung geringfügig größer ist als notwendig. Der Querschnitt der Druckausgleichsleitung wird derart gewählt, dass die gewünschte Menge des gereinigten Mediums zurück in den unter größerem Unterdruck stehenden Einlass gesaugt werden kann und den dortigen Unterdruck ausgleicht.

Wenn sich nun, bedingt durch z.B. variierende Kontamination oder variierenden Volumenstrom der Druckverlust der Filtereinrichtung ändert, ändert sich entsprechend gegenläufig die Wirkung der Saugleistung der Unterdruck erzeugenden Einrichtung im Bereich des Einlasses. Der Unterdruck im Bereich des Einlasses saugt eine entsprechend angepasste Menge gereinigten Mediums durch die Druckausgleichsleitung. In der Folge bleibt der dortige Unterdruck nahezu konstant.

In dieser Druckausgleichsleitung kann ein Drosselventil angeordnet sein, um den Strömungswiderstand in dieser Leitung auf einen optimalen Wert einstellen zu können. Ferner ist in dieser Druckausgleichsleitung ein Rückschlagventil angeordnet, das in jedem Fall verhindert, dass kontaminiertes und verschmutztes Gas unter Umgehung des Filters und des Abscheiders über die Druckausgleichsleitung in den Auslassbereich des gereinigten Mediums gelangt.

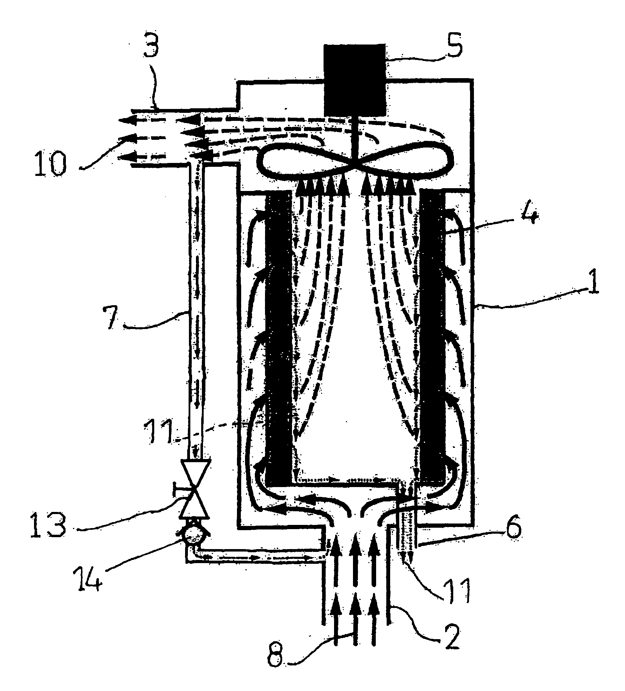

Die Zeichnung zeigt einen Abscheider nach der Erfindung. Das Gehäuse 1 des Abscheiders hat einen Einlass 2 für z.B. mit Öltröpfchen kontaminiertes gasförmiges Medium 8, einen Auslass 3 für das gereinigte gasförmige Medium 10 und einen Ablauf 6 für die abgeschiedene Flüssigkeit 11, z.B. Öl. Zwischen Einlass 2 und Auslass 3 ist die Filtervorrichtung 4 angeordnet. Die Filtervorrichtung 4 ist mit einem Filtermedium wie Faservliese gefüllt, in dem die im Luft- oder Gasstrom befindlichen Flüssigkeitströpfchen zusammengeführt werden und an der Sauberseite des Filters abfließen und durch den Abfluss 6 das Gehäuse 1 des Abscheiders verlassen. Ferner befindet sich zwischen der Filtervorrichtung 4 und dem Auslass 3 eine Vorrichtung 5 zur Erzeugung von Unterdruck auf der Sauberseite des Filters 4. Diese Vorrichtung 5 kann beispielsweise ein Ventilator, ein Ejektor, eine Vakuumpumpe, ein Verdichter oder ein Gebläse sein. Die Filtervorrichtung und die Vorrichtung zur Erzeugung von Unterdruck können zu einer Vorrichtung zusammengefasst sein, z.B. ein Fliehkraftfilter mit Lüfterschaufeln, die Unterdruck erzeugen.

Der Auslass 3 ist mit dem Einlass 2 über eine Druckausgleichsleitung 7 verbunden, so dass ein Teil des gereinigten Gases 10 über diese Ausgleichsleitung 7 zum Einlass 3 des Abscheiders zurückströmt. Die Druckausgleichsleitung 7, z.B. ein Schlauch, ist so dimensioniert, dass der Unterdruck am Einlass 2 trotz der sich ändernden Druckverluste in der Filtervorrichtung 4 nahezu konstant bleibt. In der Druckausgleichsleitung 7 ist eine einstellbare Drosselvorrichtung 13 angeordnet, mit deren Hilfe die optimale Menge des rückzuführenden gereinigten Gases eingestellt werden kann. Ferner ist in der Druckausgleichsleitung 7 ein Rückschlagventil 14 angeordnet, das eine Strömung von Einlass 2 über die Druckausgleichsleitung 7 zum Auslass 3 des Abscheiders verhindert.

Die Funktion der Erfindung wird anhand von Beispielen während der Entlüftung des Kurbelwellenraumes eines Gasmotors erläutert.

Beispiel 1:

Bei einem Gasmotor, der mit geringster Leistung arbeitet, ist auch der Volumenstrom des in den Abscheider strömenden Ölnebels gering. Weil das Filterelement 4 frisch, d.h. unbenutzt eingebaut ist, ist auch der Druckverlust beim Durchströmen des Filters 4 klein und beträgt ca. 30 mm Ws. Der Auslass 3 des Abscheiders ist an der Ansaugleitung eines Abgas-Turboladers angeschlossen, der bei kleiner Leistung des Gasmotors einen geringen Ansaugunterdruck von -30 mm erzeugt. Dieser Druck herrscht auch im Auslass 3 des Abscheiders. $P_3$ = -30 mm Ws. Die Unterdruck erzeugende Vorrichtung, z.B. ein Lüfter 5, hat bei geringem Volumenstrom - Kennlinien bedingt - eine geringfügig größere Saugleistung von 90 mm Ws. Dadurch beträgt auch der Druck im Einlass 2 des Abscheiders und damit auch im Kurbelwellenraum des Gasmotors $P_2$ = -90 mm Ws. Dieser Wert liegt außerhalb einer Toleranz von 0 bis -70 mm Ws.

Wenn erfindungsgemäß der Auslass 3 mit dem Einlass 2 über eine Druckausgleichsleitung 7 verbunden ist, dann saugt der niedrige Druck von $P_2$ = -90 mm Ws über die Druckausgleichsleitung 7 gereinigtes Gas vom Auslass 3 des Abscheiders ab, so dass der Druck im Einlass 2 von -90 mm Ws auf ein noch erlaubtes Minimum von $P_2$ = -70 mm Ws steigt. Mit Hilfe der Drosselvorrichtung 13 kann der jeweils noch zulässige Druck im Einlass 2 des Abscheiders und damit auch im Kurbelwellenraum des Gasmotors einreguliert werden, und in dieser Grundeinstellung soll das System Gasmotor - Abgas-Turbolader - Abscheider verbleiben.

Beispiel 2:

Der Gasmotor arbeitet mit großer Leistung mit der Folge, dass auch der Volumenstrom des dem Abscheider zugeführten Ölnebels groß ist. Ist das Filterelement 4 wie ein Schwamm mit Flüssigkeit bzw. Öl gesättigt, dann ist auch der Druckverlust beim Durchströmen des Filters 4 groß, und zwar wegen der größeren Strömungsgeschwindigkeit und des größeren Strömungswiderstandes im Filter 4. Der Druckverlust in der Filtervorrichtung beträgt beispielsweise $\Delta p_4$ = 70 mm Ws. Bei großer Leistung des Gasmotors ist auch der vom Turbolader erzeugte Ansaugdruck groß und beträgt beispielsweise $P_3$ = -70 mm Ws. Dieser Druck herrscht auch im Auslass 3 des Abscheiders. Ohne Unterstützung durch den Lüfter 5 wäre der Druck im Einlass 2

$$P_2 = P_3 + \Delta p_4$$

$$P_2 = -70 \text{ mm Ws} + 70 \text{ mm Ws} = 0 \text{ mm Ws}.$$

Dieser Wert liegt nahe an einem nicht zulässigen Überdruck im Kurbelwellenraum. Zur Vermeidung dieser Gefahr dient der Lüfter 5, der eine Steigerung der Saugleistung bewirkt.

Der Lüfter 5 bewirkt bei großem Volumenstrom - Kennlinien bedingt - eine zusätzliche Drucksteigerung von

$$\Delta p_5 = -85 \text{ mm Ws.}$$

Der Druck $P_2$ im Einlass 2 des Abscheiders und damit auch der Druck im Kurbelwellenraum des Gasmotors ist gleich dem Druck im Auslass 3 des Abscheiders weniger dem Druckverlust im Filter 4 plus der Unterdrucksteigerung durch den Lüfter 5, also

$$P_2 = \quad P_3 \quad + \quad \Delta p_4 \quad - \quad \Delta p_5$$

$$P_2 = -70 \text{ mm Ws} + 70 \text{ mm Ws} - 85 \text{ mm Ws} = -85 \text{ mm Ws.}$$

Auch dieser Druck im Kurbelwellenraum liegt nicht im erlaubten Bereich von 0 bis -70 mm Ws.

Der Druck $P_2$ = -85 mm Ws im Einlass 2 ist um 15 mm Ws niedriger als der Druck $P_3$ = -70 mm Ws im Auslass 3. Es strömt deshalb ein Teil des gereinigten gasförmigen Mediums vom Auslass 3 zum Einlass 2 und erhöht dort den zu niedrigen Druck.

Beispiel 3:

Entspricht dem Beispiel 2, jedoch mit dem Unterschied, dass die Filtervorrichtung 4 nach langer Betriebsdauer verschmutzt ist und deshalb beim Durchströmen dieser Filtervorrichtung große Druckverluste entstehen.

Wie im Beispiel 2 ist bei großer Leistung des Gasmotors und des Turboladers ein großer Ansaug-Unterdruck von $P_3$ = -70 mm Ws zu erwarten.

Die verschmutzte, teilweise zugesetzte Filtervorrichtung verursacht bei großem Volumenstrom auch einen sehr großen Druckverlust $\Delta p_4$ = 150 mm Ws.

Der ungeregelte Lüfter hat wie bei Beispiel 2 eine Saugleistung $\Delta p_4$ = 150 mm Ws.

Der Druck im Einlass 2 des Abscheiders und im Kurbelwellenraum beträgt

$$P_2 = \quad P_3 \quad + \quad \Delta p_4 \quad - \quad \Delta p_5$$

$$P_2 = -70 \text{ mm Ws} + 150 \text{ mm Ws} - 85 \text{ mm Ws}$$

$$P_2 = -5 \text{ mm Ws.}$$

Der Druck von -5 mm Ws im Kurbelwellenraum liegt gerade noch im erlaubten Bereich von 0 bis 70 mm Ws. Dieser Druck im Einlass 2 des Abscheiders ist wesentlich größer als der Druck $P_3$ = -70 mm Ws im Auslass 3 des Abscheiders, so dass kontaminiertes Gas über die Druckausgleichsleitung 7 zum Auslass 3 des Abscheiders strömen würde, wenn dies nicht durch das Rückschlagventil 13 verhindert würde.

Wenn der Druckverlust in der Filtervorrichtung 4 größer ist als die Saugleistung des Lüfters 5, funktioniert das System zur Druckregelung nicht mehr und das Rückschlagventil schließt.

Der Abscheider kann nun weiter betrieben werden, wobei der Druckverlust in der Filtervorrichtung 4 weiter steigt, bis der ständig überwachte Druck im Kurbelwellenraum eine nicht zulässige Größe erreicht.

**Bezugszeichenliste**

1   Gehäuse
2   Einlass für das kontaminierte Medium

| 3 | Auslass für das gereinigte Medium |
|---|---|
| 4 | Filtervorrichtung |
| 5 | Einrichtung zur Erzeugung von Unterdruck, Lüfter |
| 6 | Ablauf |
| 7 | Druckausgleichsleitung |
| 8 | Zustrom (kontaminiert), Einlassbereich |
| 10 | Abstrom (gereinigt), Auslassbereich |
| 11 | abgeschiedene Flüssigkeit |
| 13 | Drosselvorrichtung |
| 14 | Rückschlagventil |

$P_2$ Druck im Einlass
$P_3$ Druck im Auslass

$\Delta p_4$ Druckverlust im Filter
$\Delta p_5$ Vergrößerung des Saugdrucks durch die Einrichtung zur Erzeugung von Unterdruck

**Patentansprüche**

1. Abscheider für mit Flüssigkeitstropfen oder Nebel kontaminiertes gasförmiges Medium, z.B. Luft (8), mit einem Gehäuse (1), das einen Einlass (2) für das kontaminierte Medium (8) und einen Auslass (3) für das gereinigte Medium (10) sowie einen Ablauf (6) für die abgeschiedene Flüssigkeit (11) aufweist und das mit mindestens einer Filtervorrichtung (4) versehen ist zur Reinigung des kontaminierten Mediums und zwischen der Filtervorrichtung (4) und dem Auslass (3) mindestens eine Unterdruck erzeugende Vorrichtung (5) angeordnet ist, die ungeregelt mit annähernd konstanter Leistung saugt,
**dadurch gekennzeichnet, dass** der Auslassbereich (3) über eine Druckausgleichsleitung (7) mit dem Einlassbereich (2) verbunden ist zur Rückführung eines Teils des gereinigten gasförmigen Mediums (10).

2. Abscheider nach Anspruch 1, **dadurch gekennzeichnet, dass** in der Druckausgleichsleitung (7) eine einstellbare Drosselvorrichtung (13) angeordnet ist.

3. Abscheider nach Anspruch 2, **dadurch gekennzeichnet, dass** in der Druckausgleichsleitung (7) ein Rückschlagventil (14) angeordnet ist.

**EP 2 039 414 A1**

Europäisches
Patentamt

European
Patent Office

Office européen
des brevets

## EUROPÄISCHER RECHERCHENBERICHT

Nummer der Anmeldung

EP 08 01 6059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 203 02 824 U1 (HENGST GMBH & CO KG [DE]) 8. Juli 2004 (2004-07-08) * Absätze [0098], [0162], [0163]; Abbildungen 6,18 * ----- | 1-3 | INV. B01D46/44 F01M13/04 |

| RECHERCHIERTE SACHGEBIETE (IPC) |
|---|
| B01D F01M |

Der vorliegende Recherchenbericht wurde für alle Patentansprüche erstellt

| Recherchenort | Abschlußdatum der Recherche | Prüfer |
|---|---|---|
| München | 20. Januar 2009 | Hoffmann, Alexander |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 6059

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2009

| Im Recherchenbericht angeführtes Patentdokument | Datum der Veröffentlichung | Mitglied(er) der Patentfamilie | Datum der Veröffentlichung |
|---|---|---|---|
| DE 20302824 U1 | 08-07-2004 | EP 1464797 A2 | 06-10-2004 |

EPO FORM P0461

Für nähere Einzelheiten zu diesem Anhang : siehe Amtsblatt des Europäischen Patentamts, Nr.12/82